(19) Europäisches Patentamt
European Patent Office
Office européen des brevets

(11) **EP 4 567 140 A1**

(12) **EUROPEAN PATENT APPLICATION**
published in accordance with Art. 153(4) EPC

(43) Date of publication:
**11.06.2025 Bulletin 2025/24**

(21) Application number: **23857160.8**

(22) Date of filing: **04.08.2023**

(51) International Patent Classification (IPC):
**C22B 7/04** (2006.01)     **B01D 53/62** (2006.01)
**B01D 53/78** (2006.01)     **B01D 53/92** (2006.01)
**C01B 32/50** (2017.01)     **C22B 3/16** (2006.01)
**C22B 26/20** (2006.01)

(52) Cooperative Patent Classification (CPC):
**B01D 53/62; B01D 53/78; B01D 53/92;
C01B 32/50; C22B 3/16; C22B 7/04; C22B 26/20**

(86) International application number:
**PCT/JP2023/028627**

(87) International publication number:
**WO 2024/043046 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.08.2022 JP 2022132038**

(71) Applicant: **KABUSHIKI KAISHA KOBE SEIKO
SHO (KOBE STEEL, LTD.)
Hyogo 651-8585 (JP)**

(72) Inventors:
• **MURAKAMI, Kazuki**
  **Hyogo, 676-8670 (JP)**
• **SAKAI, Koji**
  **Hyogo, 676-8670 (JP)**
• **TAKAHASHI, Yoichi**
  **Hyogo, 676-8670 (JP)**
• **SASAKI, Tatsuya**
  **Hyogo, 651-2271 (JP)**

(74) Representative: **TBK
Bavariaring 4-6
80336 München (DE)**

(54) **METHOD FOR EXTRACTING CALCIUM, METHOD FOR FIXING CARBON DIOXIDE, AND APPARATUS FOR FIXING CARBON DIOXIDE**

(57)     A method for fixing carbon dioxide according to an aspect of the present invention includes: circulating a solvent containing a polyol compound through a slag layer formed by charging slag containing calcium in a container; aerating, with a gas containing carbon dioxide, a calcium extract obtained by passage of the solvent through the slag layer in the circulating; and separating, by solid-liquid separation, a precipitate precipitated from a mixed solution obtained in the aerating, wherein in the circulating step, the solvent is circulated at a velocity at which the slag layer does not flow.

FIG. 1

EP 4 567 140 A1

**Description**

[TECHNICAL FIELD]

The present invention relates to a method for extracting calcium, a method for fixing carbon dioxide, and a carbon dioxide fixation apparatus.

[BACKGROUND ART]

In recent years, global warming has brought problems of climate change. Carbon dioxide ($CO_2$) in the atmosphere is one of greenhouse effect gases and is considered to be a main factor of global warming. Therefore, a reduction of $CO_2$ emissions and the like are required.

As a means for reducing $CO_2$ emissions, there is a technology for fixing $CO_2$. Known is a method for fixing $CO_2$ by using, as an object which fixes $CO_2$, an alkaline earth metal-containing substance such as slag or the like (Japanese Unexamined Patent Application, Publication No. 2005-097072).

[PRIOR ART DOCUMENTS]

[PATENT DOCUMENTS]

Patent Document 1: Japanese Unexamined Patent Application, Publication No. 2005-097072

[SUMMARY OF THE INVENTION]

[PROBLEMS TO BE SOLVED BY THE INVENTION]

In Patent Document 1, the alkaline earth metal-containing substance is charged into an aqueous solution containing a weakly basic and strongly acidic salt and being put in a first reaction container, the resulting mixture is agitated, and a calcium chloride- ($CaCl_2$-) containing aqueous solution after the agitation is transferred to a second reaction container and aerated with a carbon dioxide gas to generate calcium carbonate ($CaCO_3$); thus, $CO_2$ is fixed and a carbonate is obtained.

In Patent Document 1, the agitation may cause fine powder of the alkaline earth metal-containing substance to be mixed in the aqueous solution. The aqueous solution after the aeration with the carbon dioxide gas and the resulting carbonate may have decreased purities due to the fine powder mixed, and their applications may be limited. Furthermore, since the agitation and the aeration are performed in different reaction containers, operation for fixing carbon dioxide may become complicated.

In view of the foregoing circumstances, an object of the present invention is to provide: a method for extracting calcium which enables efficiently extracting calcium in slag into a solvent while inhibiting generation of fine powder of the slag; and a method for fixing carbon dioxide and a carbon dioxide fixation apparatus which enable easily fixing carbon dioxide to a calcium extract extracted by the extraction method and improving purities of the solvent and a carbonate after fixing the carbon dioxide.

[MEANS FOR SOLVING THE PROBLEMS]

A method for extracting calcium according to an aspect of the present invention for solving the above problems includes: circulating a solvent containing a polyol compound through a slag layer formed by charging slag containing calcium in a container, wherein in the circulating, the solvent is circulated at a velocity at which the slag layer does not flow.

A method for fixing carbon dioxide according to another aspect of the present invention for solving the above problems includes: circulating a solvent containing a polyol compound through a slag layer formed by charging slag containing calcium in a container; aerating, with a gas containing carbon dioxide, a calcium extract obtained by passage of the solvent through the slag layer in the circulating; and separating, by solid-liquid separation, a precipitate precipitated from a mixed solution obtained in the aerating, wherein in the circulating, the solvent is circulated at a velocity at which the slag layer does not flow.

A carbon dioxide fixation apparatus according to still another aspect of the present invention for solving the above problems includes: a container for forming a slag layer by being charged with slag containing calcium; a supply portion configured to supply the container with a solvent containing a polyol compound; an adjusting portion for adjusting an amount of the solvent supplied, to maintain a velocity at which the slag layer does not flow; a retaining portion configured to retain a calcium extract discharged from the container after passing through the slag layer; an aeration portion configured to aerate, with a gas containing carbon dioxide, the extract retained in the retaining portion; and a separation portion configured to subject, to solid-liquid separation, a precipitate in a mixed solution obtained by aeration by the aeration portion.

[EFFECTS OF THE INVENTION]

The method for extracting calcium of the present invention enables efficiently extracting calcium in slag into a solvent while inhibiting generation of fine powder of the slag. The method for fixing carbon dioxide and the carbon dioxide fixation apparatus of the present invention enable easily fixing carbon dioxide to a calcium extract extracted by the extraction method and improving purities of the solvent and a carbonate after fixing the carbon dioxide.

[BRIEF DESCRIPTION OF THE DRAWINGS]

FIG. 1 is a schematic view illustrating a carbon dioxide fixation apparatus according to one embodiment of the present invention.
FIG. 2 is a schematic view illustrating a test apparatus used in Examples of the present invention.
FIG. 3 is a graph showing a relation between a superficial velocity and a pressure loss of a solvent circulated through a slag layer formed in a container of the test apparatus in FIG. 2.

[DESCRIPTION OF EMBODIMENTS]

A method for extracting calcium according to an aspect of the present invention includes a circulating step of circulating a solvent containing a polyol compound through a slag layer formed by charging slag containing calcium in a container, wherein in the circulating step, the solvent is circulated at a velocity at which the slag layer does not flow.
In the method for extracting calcium (hereinafter, may be also referred to as "the extraction method"), the solvent containing the polyol compound is circulated through and brought into contact with the slag layer of the slag containing calcium (Ca). Therefore, the calcium can be efficiently extracted into the solvent as a calcium ion. Since the circulation of the solvent is performed at a velocity at which the slag layer does not flow, generation of fine powder (slag pieces) due to a collision or the like of slag particles in the solvent can be inhibited.
A method for fixing carbon dioxide according to another aspect of the present invention includes: a circulating step of circulating a solvent containing a polyol compound through a slag layer formed by charging slag containing calcium in a container; an aerating step of aerating, with a gas containing carbon dioxide, a calcium extract obtained by passage of the solvent through the slag layer in the circulating step; and a separating step of separating, by solid-liquid separation, a precipitate precipitated from a mixed solution obtained in the aerating step, wherein in the circulating step, the solvent is circulated at a velocity at which the slag layer does not flow.
Since the method for fixing carbon dioxide enables the calcium in the slag to be efficiently extracted in an extracting step, more carbon dioxide can be fixed to the calcium. Furthermore, since generation of slag pieces in the extracting step can be inhibited, a decrease in purity of the solvent after fixing the carbon dioxide and a decrease in purity of a carbonate obtained by fixing the carbon dioxide can be inhibited.
The method for fixing carbon dioxide preferably further includes a reusing step of reusing, as at least part of the solvent in the circulating step, a separate liquid separated in the separating step. By thus circularly reusing the solvent, the method for fixing carbon dioxide can be carried out at low cost.
In the circulating step, the solvent is preferably circulated such that a pressure loss of the solvent circulated through the slag layer is less than or equal to 14 kPa/m. Thus, generation of slag pieces can be further inhibited.
In the circulating step, the solvent is preferably circulated such that a superficial velocity of the solvent circulated through the slag layer is less than or equal to 0.4 mm/s. Thus, generation of slag pieces can be still further inhibited.
The polyol compound is preferably a diol compound or a triol compound. Thus, the calcium in the slag can be more efficiently extracted as a calcium ion.
The diol compound is preferably one or two or more selected from the group consisting of ethylene glycol, propylene glycol, and diethylene glycol. Thus, the calcium in the slag can be still more efficiently extracted as a calcium ion.
The triol compound is preferably glycerin. Thus, the calcium in the slag can be still more efficiently extracted as a calcium ion.
A carbon dioxide fixation apparatus according to still another aspect of the present invention includes: a container for forming a slag layer by being charged with slag containing calcium; a supply portion configured to supply the container with a solvent containing a polyol compound; an adjusting portion for adjusting an amount of the solvent supplied, to maintain a velocity at which the slag layer does not flow; a retaining portion configured to retain a calcium extract discharged from the container after passing through the slag layer; an aeration portion configured to aerate, with a gas containing carbon dioxide, the extract retained in the retaining portion; and a separation portion configured to subject, to solid-liquid separation, a precipitate in a mixed solution obtained by aeration by the aeration portion.

Since the carbon dioxide fixation apparatus includes the adjusting portion configured to adjust the amount of the solvent supplied to the slag layer to an amount at which the slag does not flow, generation of slag pieces can be inhibited, and the carbon dioxide can be efficiently fixed.

As referred to herein, the "polyol compound" means an organic compound having a plurality of alcoholic hydroxyl groups (groups each obtained by substituting a hydrogen atom of an aliphatic hydrocarbon with a hydroxy group (-OH)). Similarly, the "diol compound" means an organic compound having two alcoholic hydroxyl groups, and the "triol compound" means an organic compound having three alcoholic hydroxyl groups.

Details of Embodiments

Hereinafter, the present invention will be described in detail with reference to the drawings as appropriate. It is to be noted that the drawings are merely illustrative and schematically illustrate each component (each member); therefore, the shape, dimension, etc. thereof may be different in an actual case, and a member such as a pump for transferring a liquid (e.g., a solvent described later), a valve for appropriately controlling the timing of transferring the liquid, or the like may be omitted. Furthermore, the present specification may include a plurality of upper limit values and a plurality of lower limit values as numerical ranges of a component of the present invention. Such a plurality of upper limit values and such a plurality of lower limit values are presented as indicating that one value may be arbitrarily selected from each range, or that these values may be arbitrarily combined.

Method for Fixing Carbon Dioxide

The method for fixing carbon dioxide principally includes: a circulating step of circulating a solvent containing a polyol compound through a slag layer formed by charging slag containing calcium in a container; an aerating step of aerating, with a gas containing carbon dioxide, a calcium extract obtained by passage of the solvent through the slag layer in the circulating step; and a separating step of separating, by solid-liquid separation, a precipitate precipitated from a mixed solution obtained in the aerating step. In the circulating step, the solvent is circulated at a velocity at which the slag layer does not flow.

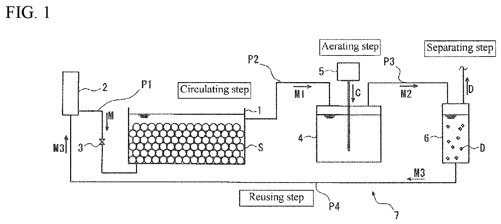

The method for fixing carbon dioxide further includes a reusing step of reusing, as at least part of the solvent in the circulating step, a separate liquid separated in the separating step. The method for fixing carbon dioxide is carried out by using a carbon dioxide fixation apparatus as illustrated in FIG. 1.

Carbon Dioxide Fixation Apparatus

The carbon dioxide fixation apparatus principally includes: a container 1 for forming a slag layer S by being charged with slag containing calcium; a supply portion 2 configured to supply the container 1 with a solvent M containing a polyol compound; an adjusting portion 3 for adjusting an amount of the solvent M supplied, to maintain a velocity at which the slag layer S does not flow; a retaining portion 4 configured to retain a calcium extract M1 discharged from the container 1 after passing through the slag layer S; an aeration portion 5 configured to aerate, with a gas C containing carbon dioxide, the extract M1 retained in the retaining portion 4; and a separation portion 6 configured to subject, to solid-liquid separation, a precipitate D in a mixed solution M2 obtained by aeration by the aeration portion 5.

The carbon dioxide fixation apparatus further includes a circulation portion 7 configured to circulate, to the supply portion 2, a separate liquid M3 from which the precipitate D has been separated in the separation portion 6.

Slag

The slag is not particularly limited as long as it contains calcium, and examples thereof include blast furnace slag, steel slag, cement, concrete waste, glass waste, coal ash, and sludge incineration ash. The blast furnace slag means a slag generated in a process of producing pig iron, and the steel slag means slag generated in a process of producing steel, such as converter slag or electric furnace slag. In such slag, for example, calcium is present in a form of calcium oxide $(CaO)$.

Solvent

The solvent M contains the polyol compound. The polyol compound is a medium for extracting the calcium from the slag. The polyol compound is an organic compound having a plurality of alcoholic hydroxyl groups. An alcoholic hydroxyl group is a hydroxy group obtained by substituting a hydrogen atom of an aliphatic hydrocarbon and does not include a hydroxy group obtained by substituting a hydrogen atom of a hydrocarbon constituting an aromatic ring (for example, a hydroxy group of a phenol).

The polyol compound is not particularly limited as long as it is an organic compound having a plurality of alcoholic hydroxyl groups, and a diol compound or a triol compound is preferred.

The diol compound is not particularly limited as long as it is an organic compound having two alcoholic hydroxyl groups, and examples thereof include ethylene glycol, propylene glycol, diethylene glycol, butanediol, and diethanolamine. Of these, for example, the diol compound is preferably one or two or more selected from the group consisting of ethylene glycol, propylene glycol, and diethylene glycol.

For example, it is generally known that the solubility of calcium in ethylene glycol is approximately 10 times the solubility in water. In other words, the solubility of calcium in a diol compound is far higher than the solubility in water. Therefore, when the diol compound is one or two or more selected from the above group, the calcium can be more efficiently extracted from the slag layer S.

The triol compound is not particularly limited as long as it is an organic compound having three alcoholic hydroxyl groups, and glycerin is preferred. By using glycerin, the calcium can be more efficiently extracted from the slag layer S.

The upper limit value of a polyol compound concentration in the solvent M circulated through the slag layer S is preferably 60% by mass, more preferably 50% by mass, and still more preferably 40% by mass. When the polyol compound concentration is greater than the upper limit value, precipitation of the precipitate (carbonate) in the aerating step described later may decrease. That is to say, the efficiency of fixing carbon dioxide may decrease. The lower limit value of the polyol compound concentration in the solvent M in the circulating step is preferably 20% by mass and more preferably 30% by mass. When the polyol compound concentration is less than the lower limit value, a sufficient amount of calcium may not be eluted from the slag layer S into the solvent M.

The solvent M preferably further contains water. Since being typically in a liquid state under normal pressure and temperature, the diol compound and the triol compound can be relatively easily mixed with the water to be circulated through the slag layer S. The water serves as a supply source of protons ($H^+$) for ionizing (ionizing into carbonate ions) carbon dioxide. Furthermore, in the circulating step described later, calcium ions extracted by the polyol compound are transferred to (diffused in) the water, and carbon dioxide is dissolved in the water as carbonate ions ($CO_3^{2-}$). As a result, the calcium ions and the carbonate ions react with each other in the water as a reaction field to be precipitated as calcium carbonate. Such water is not particularly limited as long as it functions as a catalyst as described above and is exemplified by pure water.


Circulating Step


In the circulating step, the solvent M containing the polyol compound is circulated through the slag layer S formed by charging the slag containing calcium in the container 1. The container 1 is not particularly limited as long as the slag can be charged therein to form the slag layer S and the solvent M containing the polyol compound can be circulated through the slag layer S.

In the circulating step, the solvent M is circulated at a velocity at which the slag layer S does not flow. That is to say, the solvent M is circulated at a circulation velocity at which slag particles in the slag layer S do not mutually transfer in the container 1 and a collision or the like thereof does not occur. If a collision or the like of the slag particles occurs owing to the circulation of the solvent M, debris (slag pieces) is mixed in the solvent M to be discharged from the container 1. Owing to the slag pieces mixed in the solvent M, the solvent M after the fixation treatment of carbon dioxide may have a decreased purity, and use or reuse applications thereof may be limited. Furthermore, through the fixation treatment of carbon dioxide, a carbonate is obtained from the solvent M discharged from the container 1; if the slag pieces are also mixed in the carbonate, the purity thereof may decrease, and use applications thereof may be limited. To improve the purity of the solvent M discharged from the container 1, treatment for removing the slag pieces is required, and thus, cost for using or reusing the solvent M discharged from the container 1 and the carbonate may increase.

The carbon dioxide fixation apparatus includes: the supply portion 2 configured to supply the solvent M; and the adjusting portion 3 for adjusting the amount of the solvent M supplied. The adjusting portion 3 adjusts a flow rate of the solvent M supplied by the supply portion 2 to the container 1 and controls a flow velocity of the solvent M in the container 1 such that the slag layer S does not flow. The supply portion 2 is not particularly limited and is, for example, a pump for liquid. The adjusting portion 3 is not particularly limited and is, for example, an adjusting valve having a variable opening size. The adjusting portion 3 is provided on a solvent supply pipe P1 which connects the container 1 to the supply portion 2.

In the circulating step, the solvent M is preferably circulated such that a pressure loss of the solvent M circulated through the slag layer S is less than or equal to 14 kPa/m. The upper limit value of the pressure loss of the solvent M circulated through the slag layer S is more preferably 12 kPa/m, still more preferably 10 kPa/m, and particularly preferably 6 kPa/m. When the pressure loss of the solvent M circulated through the slag layer S is greater than the upper limit value, the slag particles in the slag layer S may mutually transfer in the container 1 and a collision or the like thereof may occur.

Furthermore, in the circulating step, the solvent M is preferably circulated such that a superficial velocity of the solvent M circulated through the slag layer S is less than or equal to 0.4 mm/s. The upper limit value of the superficial velocity of the solvent M circulated through the slag layer S is more preferably 0.3 mm/s. When the superficial velocity of the solvent M circulated through the slag layer S is greater than the upper limit value, the slag particles in the slag layer S may mutually transfer in the container 1 and a collision or the like thereof may occur. The lower limit value of the superficial velocity of the solvent M circulated through the slag layer S is not particularly limited and is, for example, 0.08 mm/s.

For example, in a case in which the slag is steel slag, the slag from which calcium has been removed in the circulating step can be removed from the container 1 and then dried to be used as resources such as a base course material (road material), a fertilizer, and the like.

Aerating Step

In the aerating step, the calcium extract obtained by passage of the solvent M through the slag layer S in the circulating step is aerated with the gas C containing carbon dioxide. Specifically, the solvent (calcium extract) M1 discharged from the container 1 is retained in the retaining portion 4, and the calcium extract M1 retained is aerated with the gas C containing carbon dioxide. The retaining portion 4 is a tank for retaining the calcium extract M1 supplied from the container 1 through an extract supply pipe P2. The aeration portion 5 aerates, with the gas C, the calcium extract M1 retained in the retaining portion 4. The aeration portion 5 is not particularly limited and is, for example, a known gas blowing apparatus. The aeration with the gas C by the aeration portion 5 is preferably performed while agitating the calcium extract M1 in the retaining portion 4.

Owing to the contact with the slag, the solvent M containing the polyol compound is discharged from the container 1 as the calcium extract M1 containing many calcium ions ($Ca^{2+}$). By aerating the calcium extract M1 with the gas C containing carbon dioxide, the carbon dioxide is dissolved in the calcium extract M1 as carbonate ions. When the calcium ions and the carbonate ions react with each other, a carbonate (calcium carbonate: $CaCO_3$) is precipitated as a precipitate. According to the method for fixing carbon dioxide, since the calcium extract M1 contains many calcium ions, a large amount of carbon dioxide can be fixed.

As the gas C containing carbon dioxide, an exhaust gas containing carbon dioxide discharged in industrial activities such as factory or power plant operation, transportation, etc. is preferably used. A concentration of carbon dioxide in the gas C is not particularly limited and may be a concentration equal to the concentration of carbon dioxide in the atmosphere or the exhaust gas or may be a concentration obtained by diluting or concentrating the atmosphere or the exhaust gas. The gas C may be a gas consisting exclusively of carbon dioxide.

Separating Step

In the separating step, the precipitate D precipitated from the mixed solution M2 obtained in the aerating step is subjected to solid-liquid separation. Specifically, the calcium extract (mixed solution) M2 after the aerating step, which is supplied through a mixed solution supply pipe P3, is separated by solid-liquid separation in the separation portion 6 into a solid (precipitate D) and a liquid (separate liquid M3). The separation portion 6 is not particularly limited and is, for example, a known centrifuge.

The precipitate D and the separate liquid M3 separated in the separation portion 6 are high in purity because mixing of the slag pieces is inhibited, and thus can be used or reused for wide applications. The separate liquid M3 can be reused, for example, as part of the solvent M in the circulating step as described later. The precipitate D (carbonate) can be used, for example, as a filler for resin.

Reusing Step

In the reusing step, the separate liquid M3 separated is reused as at least part of the solvent M in the circulating step. The separate liquid M3 is circulated through the circulation portion 7 to the supply portion 2 and then used as part of the solvent mixed solution to come in contact with the slag layer S. The circulation portion 7 includes a separate liquid supply pipe P4. Since mixing of the slag pieces is inhibited and the precipitate D has been removed from in the separating step, the separate liquid M3 circulated has quality comparable to that of the solvent M before contact with the slag layer S.

Advantages

Since the solvent containing the polyol compound is circulated through the slag containing calcium in the circulating step, the method for fixing carbon dioxide enables efficiently extracting calcium in the slag. Therefore, the slag through which the solvent has been circulated has a reduced calcium content and thus can be efficiently used or reused, and the solvent after contact with the slag contains much calcium and thus enables efficiently fixing carbon dioxide by being aerated with the gas containing carbon dioxide. Furthermore, since in the circulating step, the solvent is circulated at a velocity at which the slag does not flow, the method for fixing carbon dioxide enables inhibiting mixing of the slag pieces of the slag in the solvent after the circulation. Therefore, the precipitate precipitated by the aeration and the solvent after the aeration are high in purity and thus can be used or reused at low cost for wide applications.

Other Embodiments

The above embodiments do not limit the configuration of the present invention. Therefore, in the above embodiments, the components of each part of the above embodiments can be omitted, replaced, or added based on the description in the present specification and general technical knowledge, and such omission, replacement, or addition should be construed as falling within the scope of the present invention.

In the above-described embodiments, the carbon dioxide fixation apparatus includes the supply portion and the adjusting portion; however, the supply portion may incorporate the adjusting portion. That is to say, a supply portion integrated with an adjusting portion may be used.

The solvent may contain other solution(s) and/or additive(s) besides the polyol compound and the water within a range not leading to inhibition of the extraction efficiency of calcium in the slag. Examples of the other solution(s) include a hydrophilic solution and the like. Examples of the hydrophilic solution include ethanol, methanol, and the like. Furthermore, in the circulating step, a mixed solution of the polyol compound and an aqueous solution in which an additive other than the solvent is dissolved in water may be used.

The reusing step is not an essential step of the method for fixing carbon dioxide, and the separate liquid may be used for other applications.

With regard to a method for charging the slag in the container of the carbon dioxide fixation apparatus, the supply of the solvent may be started after the slag is charged in the container, or the slag and the solvent may be concurrently supplied to (charged in) the container.

Furthermore, the solvent may be supplied to the container at a constant flow rate or at a variable flow rate. Furthermore, the solvent may be continuously supplied or may be intermittently supplied.

An obstacle for preventing linear circulation of the solvent may be provided in the container. That is to say, the container may be provided with an obstacle for partly or entirely generating turbulence of the solvent in the container.

EXAMPLES

Hereinafter, the present invention is further described by way of Examples; the present invention is not limited to the Examples.

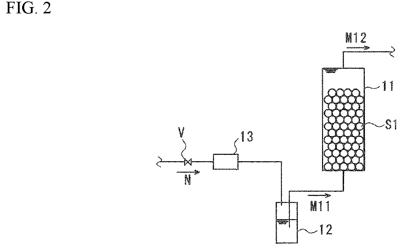

The following comparison test was conducted using the test apparatus illustrated in FIG. 2. As slag, 450 g of steel slag adjusted by sieving to have a grain size of less than or equal to 10 mm was charged in a container 11 having an internal diameter of 42 mm and a height of 230 mm to form a slag layer S1.

With regard to characteristics of the slag, f-CaO is 13% by mass. As referred to herein, f-CaO means unreacted calcium oxide (CaO) and unreacted calcium hydroxide (Ca(OH)$_2$). Content percentages of components of the slag are shown in Table 1. The content percentages are rounded to two decimal places.

Table 1

| Component [% by mass] | | | | |
|---|---|---|---|---|
| CaO | SiO$_2$ | Al$_2$O$_3$ | MgO | MnO |
| 43.80 | 11.30 | 1.27 | 2.19 | 6.86 |

As a solvent M11 containing a polyol compound, a mixture of water and glycerin (produced by FUJIFILM Wako Pure Chemical Corporation; purity: greater than 99.5%), the mixture having a glycerin concentration of 40% by mass, was prepared. In Test Example 1 and Test Example 2 in Table 2 described later, calcium was extracted in such a manner that the solvent M11 was supplied to the container 11 and circulated through the slag layer S1. The solvent M11 was retained in a solvent container 12, and then supplied to the container 11 by applying pressure with a nitrogen gas N to the solvent container 12. In Test Example 1 and Test Example 2, the flow velocity (supply velocity) of the solvent M1 was controlled by the amount of the nitrogen gas N supplied, whereby the superficial velocity was varied. The amount of the nitrogen gas N supplied was adjusted using a valve V while checking a flowmeter 13.

A solvent (calcium extract) M12 discharged from the container 11 in which the slag layer S1 was formed was separated at predetermined time intervals, and a calcium ion concentration in the solution was measured to calculate an extraction percentage E of calcium. The extraction percentage E [%] of calcium was calculated according to the following equation 1:

$$E = B/S \times 100 \qquad 1$$

wherein B denotes calcium [mol] in the calcium extract, and S denotes calcium [mol] in the slag.

In Test Example 3, 400 g of the solvent M11 and 40 g of the slag were charged in another container (beaker) and agitated to extract calcium. The agitation was performed using an agitator at 300 rpm for 1.5 hrs. under conditions involving room temperature and nitrogen atmosphere. The solvent after agitation (calcium extract) was subjected to filtration under reduced pressure (filter medium: filter paper No. 5A), and the calcium concentration in the filtrate was quantified to calculate the extraction percentage.

The turbidity of the calcium extracts of Test Examples 1 to 3 were visually checked to confirm the presence or absence of fine powder (slag pieces) in the calcium extracts. Evaluation of Test Examples 1 to 3 is shown in Table 2.

Table 2

|  | Superficial velocity | Calcium extraction percentage | Presence/absence of fine powder |
|---|---|---|---|
| Test Example 1 | 0.08 mm/s | 40% | transparent |
| Test Example 2 | 0.25 mm/s | 27% | transparent |
| Test Example 3 | - | 40% | turbid |

Although Test Example 3 shows a calcium extraction percentage comparable to that of Test Example 1, fine powder is present in the calcium extract; therefore, treatment for removing the fine powder is necessary to use or reuse the calcium extract. On the other hand, in Test Examples 1 and 2, the amount of fine powder in the calcium extracts is negligible; therefore, these calcium extracts can be reduced into a solvent to be used or reused without performing treatment for removing the fine powder.

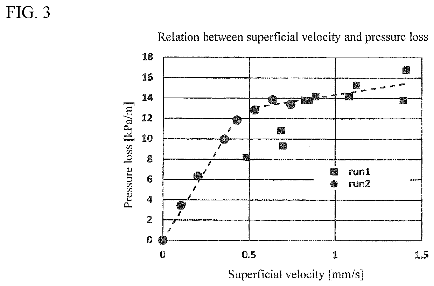

Next, Test Example 4 was conducted under the same conditions as Test Example 1 except for the superficial velocity. The test was conducted at superficial velocities varied in a range of greater than 0 mm/s and less than or equal to 1.4 mm/s. In the test, run 1 and run 2 were performed at a relatively high superficial velocity and at a relatively low superficial velocity, respectively. A pressure loss of the solvent in the container 11 was measured with a manometer. With regard to the pressure loss, a height by which a liquid level of the manometer is greater than the upper end of the slag layer S1 was measured and converted, and a change of the height was observed. FIG. 3 shows a relation between a change in superficial velocity and a change in pressure loss of the solvent.

FIG. 3 indicates that there exists a folding point of the pressure loss at a superficial velocity of 0.4 mm/s. That is to say, it can be seen that the slag begins to flow when the superficial velocity exceeds 0.4 mm/s. Therefore, from FIG. 3, it is found that the superficial velocity of the solvent M11 circulated through the slag layer S1 is preferably less than or equal to 0.4 mm/s, and that the pressure loss thereof is preferably less than or equal to 14 kPa/m.

[INDUSTRIAL APPLICABILITY]

According to the present invention, carbon dioxide can be efficiently fixed at low cost, and thus, the slag containing calcium can be effectively used; in addition, since the purities of the solvent after fixing the carbon dioxide and the precipitate in the solvent can be increased, the solvent and the precipitate can be easily used or reused. Therefore, the present invention is suitably used for fixing carbon dioxide.

[EXPLANATION OF THE REFERENCE SYMBOLS]

1, 11: Container
2: Supply portion
3: Adjusting portion
4: Retaining portion
5: Aeration portion
6: Separation portion
7: Circulation portion
12: Solvent container

13: Flowmeter
D: Precipitate
M, M11: Solvent
M1, M12: Calcium extract
M2: Mixed solution
M3: Separate liquid
N: Nitrogen gas
P1: Solvent supply pipe
P2: Extract supply pipe
P3: Mixed solution supply pipe
P4: Separate liquid supply pipe
S, S1: Slag layer
V: Valve

**Claims**

1. A method for extracting calcium, the method comprising:

    circulating a solvent comprising a polyol compound through a slag layer formed by charging slag comprising calcium in a container,
    wherein in the circulating, the solvent is circulated at a velocity at which the slag layer does not flow.

2. A method for fixing carbon dioxide, the method comprising:

    circulating a solvent comprising a polyol compound through a slag layer formed by charging slag comprising calcium in a container;
    aerating, with a gas comprising carbon dioxide, a calcium extract obtained by passage of the solvent through the slag layer in the circulating; and
    separating, by solid-liquid separation, a precipitate precipitated from a mixed solution obtained in the aerating,
    wherein in the circulating, the solvent is circulated at a velocity at which the slag layer does not flow.

3. The method for fixing carbon dioxide according to claim 2, the method further comprising:
   reusing, as at least part of the solvent in the circulating, a separate liquid separated in the separating.

4. The method for fixing carbon dioxide according to claim 2, wherein in the circulating, the solvent is circulated such that a pressure loss of the solvent circulated through the slag layer is less than or equal to 14 kPa/m.

5. The method for fixing carbon dioxide according to claim 2 or 4, wherein in the circulating, the solvent is circulated such that a superficial velocity of the solvent circulated through the slag layer is less than or equal to 0.4 mm/s.

6. The method for fixing carbon dioxide according to claim 2 or 3, wherein the polyol compound is a diol compound or a triol compound.

7. The method for fixing carbon dioxide according to claim 6, wherein the diol compound is one or two or more selected from the group consisting of ethylene glycol, propylene glycol, and diethylene glycol.

8. The method for fixing carbon dioxide according to claim 6, wherein the triol compound is glycerin.

9. A carbon dioxide fixation apparatus comprising:

    a container for forming a slag layer by being charged with slag comprising calcium;
    a supply portion configured to supply the container with a solvent comprising a polyol compound;
    an adjusting portion for adjusting an amount of the solvent supplied, to maintain a velocity at which the slag layer does not flow;
    a retaining portion configured to retain a calcium extract discharged from the container after passing through the slag layer;
    an aeration portion configured to aerate, with a gas comprising carbon dioxide, the extract retained in the retaining portion; and
a separation portion configured to subject, to solid-liquid separation, a precipitate in a mixed solution obtained by aeration by the aeration portion.

FIG. 1

FIG. 2

FIG. 3

Relation between superficial velocity and pressure loss

## INTERNATIONAL SEARCH REPORT

| | International application No. |
|---|---|
| | **PCT/JP2023/028627** |

**A.    CLASSIFICATION OF SUBJECT MATTER**

***C22B 7/04***(2006.01)i; ***B01D 53/62***(2006.01)i; ***B01D 53/78***(2006.01)i; ***B01D 53/92***(2006.01)i; ***C01B 32/50***(2017.01)i;
***C22B 3/16***(2006.01)i; ***C22B 26/20***(2006.01)i
FI:    C22B7/04 B; B01D53/62; B01D53/78; B01D53/92 240; B01D53/92 331; C01B32/50 ZAB; C22B3/16; C22B26/20

According to International Patent Classification (IPC) or to both national classification and IPC

**B.    FIELDS SEARCHED**

Minimum documentation searched (classification system followed by classification symbols)

C22B7/04; B01D53/62; B01D53/78; B01D53/92; C01B32/50; C22B3/16; C22B26/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2021-070868 A (KOBE STEEL LTD) 06 May 2021 (2021-05-06)<br>entire text | 1-9 |
| A | JP 2022-045088 A (KOBE STEEL LTD) 18 March 2022 (2022-03-18)<br>entire text | 1-9 |
| A | JP 2012-131651 A (NISSHIN STEEL CO LTD) 12 July 2012 (2012-07-12)<br>entire text | 1-9 |

☐ Further documents are listed in the continuation of Box C.      ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **19 September 2023** | **17 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/028627**

| Patent document cited in search report | | | Publication date (day/month/year) | Patent family member(s) | Publication date (day/month/year) |
|---|---|---|---|---|---|
| JP | 2021-070868 | A | 06 May 2021 | (Family: none) | |
| JP | 2022-045088 | A | 18 March 2022 | (Family: none) | |
| JP | 2012-131651 | A | 12 July 2012 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005097072 A